# EUROPÄISCHE PATENTSCHRIFT

(11) **EP 2 731 739 B1**
(45) Veröffentlichungstag und Bekanntmachung des Hinweises auf die Patenterteilung: **11.05.2016**
(21) Anmeldenummer: 12729650.7
(22) Anmeldetag: 27.06.2012
(51) Int. Cl.: B21D 13/04, B23K 26/08, B23K 26/26

(54) **VERFAHREN UND VORRICHTUNG ZUM HERSTELLEN VON MASSGESCHNEIDERTEN BLECHBÄNDERN**
METHOD AND DEVICE FOR PRODUCING TAILORED SHEET-METAL STRIPS
PROCÉDÉ ET DISPOSITIF DE FABRICATION DE BANDES DE TÔLE DÉCOUPÉES SUR MESURE

(30) Priorität: 11.07.2011 DE 102011051728
(43) Veröffentlichungstag der Anmeldung: 21.05.2014
(73) Patentinhaber: WISCO Lasertechnik GmbH, 88212 Ravensburg (DE)
(72) Erfinder: ALBER, Gerhard, 88276 Berg (DE); RETZBACH, Martin, 88276 Berg (DE)
(74) Vertreter: Otten, Roth, Dobler & Partner mbB Patentanwälte
(86) Internationale Anmeldenummer: PCT/EP2012/062466
(87) Internationale Veröffentlichungsnummer: WO 2013/007522

(56) Entgegenhaltungen:
- EP-A1- 0 438 612
- EP-A1- 0 508 102
- EP-A1- 0 888 843
- WO-A1-2010/094538
- DE-A1- 3 343 709
- DE-A1-102008 060 467
- DE-A1-102009 020 614
- DE-B- 1 288 548
- DE-B3-102010 005 757

## Beschreibung

Die Erfindung betrifft ein Verfahren und eine Vorrichtung zum Herstellen von maßgeschneiderten Blechbaändern gemäß der Ansprüche 1 und 12

Beim Einsatz von Bauteilen aus Metall, insbesondere im Kraftfahrzeugbau, wird bei belastungsrechter Auslegung großer Wert auf ein geringes Gewicht des Bauteils gelegt. Dies wird üblicherweise durch den Einsatz von sogenannten "Tailored Blanks" erreicht. Dabei handelt es sich um maßgeschneiderte Blechplatinen, die aus miteinander verschweißten Platinenzuschnitten unterschiedlicher Blechdicke, Werkstoffgüte und/oder Oberflächenbeschaffenheit zusammengesetzt sind. "Tailored Blanks" ermöglichen, verschiedene Stellen des späteren Bauteils an lokale Belastungen anzupassen, was andernfalls zusätzliche Verstärkungsteile erfordert. Vorteile von "Tailored Blanks" sind die Einsparung von Gewicht und Fertigungskosten. Für eine wirtschaftliche Herstellung von belastungsgerecht ausgelegten Bauteilen ist allerdings eine diskontinuierliche Verarbeitung von maßgeschneiderten Platinen nicht immer zufriedenstellend. Entsprechende Bearbeitungen sind aus der EP 0 508 102 A1 bekannt. Daher wurden maßgeschneiderte Metallbänder ("Tailored Strips") entwickelt, die in Folgeverbundwerkzeugen verarbeitet bzw. aus denen durch Rollformen profilierte Bauteile hergestellt werden können. Zur Herstellung von "Tailored Strips" werden üblicherweise zwei oder drei Blechbänder unterschiedlicher Dicke, Güte und/oder Oberflächenbeschaffenheit miteinander entlang ihrer Längskante kontinuierlich verschweißt. Hierzu werden die einzelnen Blechbänder (Spaltbänder), die als Coils angeliefert werden, nach dem Abwickelprozess in Richtmaschinen geebnet. Im Anschluss daran erfolgt eine Kantenbearbeitung zur Vorbereitung der miteinander zu verschweißenden Blechkanten. Sodann werden die Blechbänder in einer Laserschweißstation im Durchlauf miteinander verschweißt. Nach dem Fügeprozess wird das so hergestellte maßgeschneiderte Metallband zu einem Coil aufgehaspelt oder mittels einer Schneideinrichtung in eine Vielzahl von Platinen quergeteilt. Derartige Vorrichtungen sind beispielsweise aus der DE 10 2008 060 467 A1 oder der EP 0 888 843 A1 und der DE 1 288 548 A bekannt.

"Tailored Strips" stellen eine bewährte Technologie dar. Gleichwohl wird laufend nach Möglichkeiten gesucht, diese Technologie weiter zu entwickeln, so dass zur Fertigstellung von aus "Tailored Strips" hergestellten Endprodukten weniger Prozessschritte in der Weiterverarbeitung durchlaufen werden müssen. Insbesondere wird nach Lösungen gesucht, die es erlauben, maßgeschneiderte Bauteile aus Metall kostengünstiger herzustellen.

Der vorliegenden Erfindung lag daher die Aufgabe zugrunde, ein Verfahren sowie eine Vorrichtung der eingangs genannten Art anzugeben, mit dem bzw. der maßgeschneiderte Blechbänder hergestellt werden können, welche zur Fertigstellung eines Endproduktes weniger Prozessschritte in der Weiterverarbeitung durchlaufen müssen.

Diese Aufgabe wird durch ein Verfahren mit den Merkmalen des Anspruchs 1 und durch eine Vorrichtung mit den Merkmalen des Anspruchs 12 gelöst.

Das erfindungsgemäße Verfahren ist dadurch gekennzeichnet, dass als das mindestens eine weitere bahnförmige Halbzeug, welches der Fügestation zugeführt wird, ein bahnförmiges Halbzeug verwendet wird, das eine dreidimensionale Struktur, ein Hohlprofil und/oder eine Vielzahl von entlang seiner Längskante aufeinanderfolgenden Ausnehmungen und/oder Löchern aufweist.

Da die zu verbindenden Teile bahnförmig dem Fügeprozess zugeführt werden, kann kostengünstig ein Halbzeug ("Tailored Strip") hergestellt werden, das in der nachfolgenden Weiterbearbeitung zur Fertigstellung eines belastungsgerecht ausgelegten Bauteils weniger Prozessschritte (Bearbeitungsschritte) durchlaufen muss, als dies bei bislang verfügbaren Halbzeugen zur Herstellung entsprechender Bauteile der Fall ist. Mit dem erfindungsgemäßen Verfahren bzw. einer entsprechend ausgeführten Vorrichtung können somit maßgeschneiderte Blechbänder hergestellt werden, deren Weiterverarbeitung zur Fertigstellung eines belastungs- und/oder funktionsgerecht ausgelegten Bauteils weniger Prozessschritte erfordert und insoweit kostengünstig ist.

Bevorzugte und vorteilhafte Ausgestaltungen des erfindungsgemäßen Verfahrens sind in den Unteransprüchen angegeben.

Eine vorteilhafte Ausgestaltung des erfindungsgemäßen Verfahrens ist dadurch gekennzeichnet, dass als das mindestens eine weitere bahnförmige Halbzeug, welches der Fügestation zugeführt wird, ein bahnförmiges Halbzeug verwendet wird, das in Form eines Profils ausgebildet ist und eine Rinne oder mehrere parallel zueinander verlaufende Rinnen aufweist. Auf diese Weise können Tailored Strips hergestellt werden, die bei relativ geringem Gewicht eine relativ hohe Biegefestigkeit aufgrund des im Fügeprozess angefügten profilierten Halbzeuges aufweisen.

Eine vorteilhafte Weiterbildung dieser Verfahrensausgestaltung ist dadurch gekennzeichnet, dass das mindestens eine weitere bahnförmige Halbzeug der Fügestation so zugeführt wird, dass die mindestens eine Rinne durch das mindestens eine Blechband abgedeckt wird und mit demselben nach dem Fügen ein geschlossenes Hohlprofil bildet.

In weiterer Ausgestaltung dieser Verfahrensausgestaltung wird vorgeschlagen, dass das Hohlprofil nach dem Fügen mit Wärmeisoliermaterial befüllt oder ausgeschäumt wird. Auf diese Weise lassen sich kostengünstig paneelförmige Isolierbauteile, insbesondere wärmeisolierende Fassadenverkleidungspaneele für Gebäude und dergleichen herstellen.

Eine vorteilhafte Variante dieser Verfahrensausgestaltung sieht vor, dass die mindestens eine Rinne vor dem Fügen mit Wärmeisoliermaterial befüllt oder beschichtet wird. Auch auf diese Weise lassen sich paneelförmige Isolierbauteile, insbesondere wärmeisolierende Fassadenverkleidungspaneele für Gebäude kostengünstig herstellen.

Eine weitere vorteilhafte Ausgestaltung des erfindungsgemäßen Verfahrens ist dadurch gekennzeichnet, dass als das mindestens eine weitere bahnförmige Halbzeug, welches der Fügestation zugeführt wird, ein bahnförmiges Halbzeug verwendet wird, das mindestens zwei parallel zueinander verlaufende Lochreihen aufweist. Auf diese Weise lassen sich maßgeschneiderte Halbzeuge insbesondere zur Fertigung von Ständern und/oder Trägern, beispielsweise für Lagerregale, oder zur Fertigung von Kabelkanälen (Kabelrinnen) kostengünstig herstellen.

Eine weitere vorteilhafte Ausgestaltung des erfindungsgemäßen Verfahrens sieht vor, dass als das mindestens eine weitere bahnförmige Halbzeug, welches der Fügestation zugeführt wird, ein bahnförmiges Halbzeug verwendet wird, das entlang seiner Längskante eine durch aufeinanderfolgende Ausnehmungen definierte Zahnstruktur aufweist. Auch auf diese Weise lassen sich maßgeschneiderte Halbzeuge zur Fertigung von Ständern und/oder Trägern, beispielsweise für Lagerregale, oder zur Fertigung von Kabelkanälen (Kabelrinnen) kostengünstig herstellen. Hierzu wird das mindestens eine weitere bahnförmige Halbzeug der Fügestation so zugeführt, dass die Ausnehmungen dem mindestens einen Blechband zugewandt sind und mit demselben nach dem Fügen fensterartige Öffnungen definieren.

Eine weitere vorteilhafte Ausgestaltung des erfindungsgemäßen Verfahrens sieht vor, dass als das mindestens eine weitere bahnförmige Halbzeug, welches der Fügestation zugeführt wird, ein bahnförmiges Halbzeug verwendet wird, das aus einem Strangpressprofil, insbesondere einem Strangpresshohlprofil besteht oder gebildet ist. Dabei wird als Strangpressprofil vorzugsweise ein aus relativ weichem Metall bestehendes Strangpressprofil verwendet. Beispielsweise kann das Strangpressprofil aus Kupfer und/oder Aluminium oder einer entsprechenden Metalllegierung hergestellt sein. Auf diese Weise lassen sich maßgeschneiderte Halbzeuge insbesondere zur Fertigung von Kühlkörpern, Führungsschienen, Sitzschienen, Türschwellerprofilen, Fensterprofilen, Beleuchtungskörpern, Sonnenschutzlamellen sowie Lamellenwänden kostengünstig herstellen.

Eine weitere vorteilhafte Ausgestaltung des erfindungsgemäßen Verfahrens sieht vor, dass das mindestens eine weitere bahnförmige Halbzeug der Fügestation so zugeführt wird, dass dasselbe nach dem Fügen einen von der ebenen Oberfläche des mindestens einen Blechbandes abstehenden Steg definiert. Auf diese Weise lassen sich maßgeschneiderte Halbzeuge insbesondere zur Fertigung von Fassadenpaneelen für Gebäude sowie von Wand-, Boden- und/oder Deckenpanellen für Hohlwände, Hohlböden bzw. Hohldecken von Nutzfahrzeugen, Schiffen und/oder Flugzeugen kostengünstig herstellen.

Eine weitere vorteilhafte Ausgestaltung des erfindungsgemäßen Verfahrens sieht vor, dass aus dem mindestens einen Blechband und dem mindestens einen weiteren bahnförmigen Halbzeug, gegebenenfalls durch Hinzufügen mindestens eines weiteren Blechbandes, das eine im Wesentlichen ebene Oberfläche aufweist, und/oder mindestens eines weiteren bahnförmigen, profilierten Halbzeuges, ein Hohlprofil gebildet wird, das nach dem Fügen durch Innenhochdruckumformen umgeformt wird. Auf diese Weise lassen sich maßgeschneiderte Hohlbauteile mit komplexen Formen und geringem Gewicht, beispielsweise Fahrwerksteile und/oder Abgasrohre für Kraftfahrzeuge, bzw. entsprechende Halbzeuge zur Fertigung solcher Hohlbauteile kostengünstig herstellen. Durch das Innenhochdruckumformen kann man insbesondere die Wandstärke der Hohlbauteile an bestimmten Stellen des jeweiligen Bauteils bedarfsgerecht anpassen und ausformen.

Die oben genannten Ausgestaltungen des erfindungsgemäßen Verfahrens beinhalten insbesondere auch eine Ausführungsform, bei der sich das mindestens eine Blechband, das eine im Wesentlichen ebene Oberfläche aufweist, und das mindestens eine weitere bahnförmige Halbzeug, welches mit dem Blechband entlang seiner Längskante stoffschlüssig verbunden wird, in ihrer Dicke, Materialgüte und/oder Oberflächenbeschaffen voneinander unterscheiden.

Die erfindungsgemäße Vorrichtung ist im Wesentlichen dadurch gekennzeichnet, dass der Fügestation in Laufrichtung des bahnförmigen Halbzeuges mindestens eine Bearbeitungsstation vorgeordnet ist, die ausgebildet ist, um das weitere bahnförmige Halbzeug zu profilieren und/oder in dieses eine Vielzahl von aufeinander folgenden Löchern und/oder Ausnehmungen zu schneiden.

Eine vorteilhafte Ausgestaltung der erfindungsgemäßen Vorrichtung ist dadurch gekennzeichnet, dass der Fügestation in Laufrichtung des bahnförmigen Halbzeuges eine Schneidevorrichtung zum Ablängen des hergestellten maßgeschneiderten Blechbandes nachgeordnet ist, wobei die Schneidevorrichtung an einer Trägereinrichtung angebracht ist, die parallel zu dem maßgeschneiderten Band in Bandlaufrichtung vor und zurück bewegbar ist. Hierdurch kann ein kontinuierlicher Fügeprozess erzielt werden.

Zwischen der Bearbeitungsstation, die das weitere bahnförmige Halbzeug profiliert und/oder in dieses eine Vielzahl von aufeinander folgenden Löchern und/oder Ausnehmungen schneidet, und der Fügestation ist vorzugsweise mindestens eine Kantenbearbeitungsstation angeordnet, die ausgebildet ist, um eine an das mindestens eine Blechband anzufügende Kante des bahnförmigen Halbzeuges durch Schleifen und/oder Fräsen zu bearbeiten.

Nachfolgend wird die Erfindung anhand einer mehrere Ausführungsbeispiele darstellenden Zeichnung näher erläutert. Es zeigen schematisch:
- Figuren 1 und 2: ein erstes und ein zweites Ausführungsbeispiel einer erfindungsgemäßen Vorrichtung zum Herstellen von maßgeschneiderten Blechbändern, jeweils in perspektivischer Darstellung;
- Fig. 3: ein erfindungsgemäß hergestelltes maßgeschneidertes Blechband, in Querschnittansicht;
- Figuren 4 bis 6: Abschnitte von drei weiteren Ausführungsbeispielen erfindungsgemäß hergestellter Blechbänder, jeweils in perspektivischer Querschnittdarstellung;
- Fig. 7: eine Querschnittansicht des maßgeschneiderten Blechbandes der Fig. 6;
- Figuren 8 bis 10: Abschnitte von drei weiteren Ausführungsbeispielen erfindungsgemäß hergestellter Blechbänder, jeweils in perspektivischer Querschnittdarstellung;
- Fig. 11: das Detail der Fig. 10 in vergrößerter Querschnittansicht; und
- Fig. 12: das maßgeschneiderte Blechband der Fig. 10 nach einer Innenhochdruckumformung.

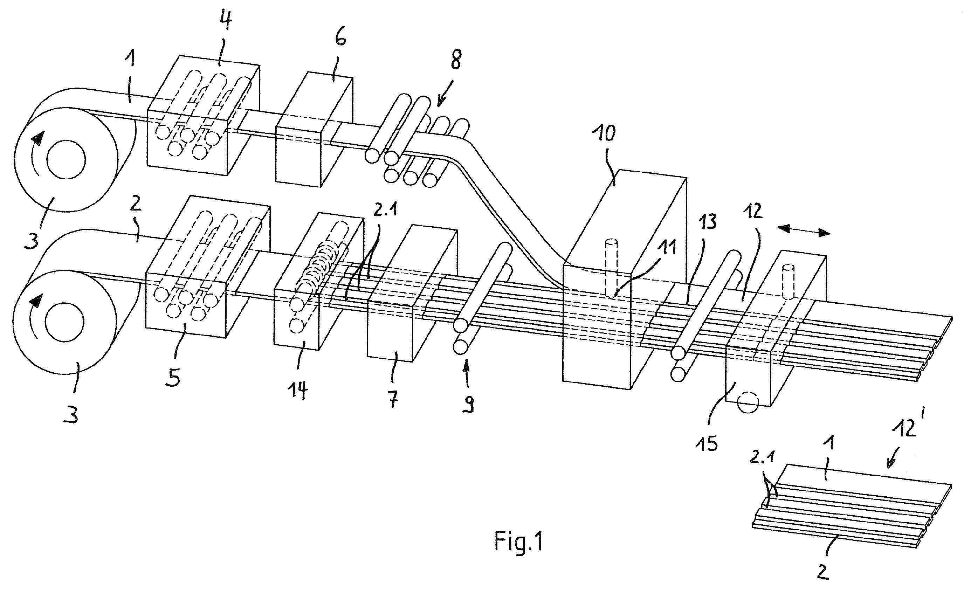

In Fig. 1 ist ein erstes Ausführungsbeispiel einer erfindungsgemäßen Vorrichtung bzw. Anlage zur Herstellung von maßgeschneiderten Blechbändern ("Tailored Strips") 12 dargestellt. In der Vorrichtung werden mindestens zwei Spaltbänder 1, 2 unterschiedlicher Dicke, Werkstoffgüte und/oder Oberflächenbeschaffenheit längsseitig miteinander stoffschlüssig verbunden, vorzugsweise verschweißt. Die Spaltbänder 1, 2 können typischerweise aus Stahlbändern unterschiedlicher Dicke und/oder Werkstoffgüte gefertigt sein. Ebenso können die Tailored Strips 12 aber auch aus Nichteisen-Blechbändern, beispielsweise aus Aluminium- und/oder Magnesiumbändern unterschiedlicher Güten und/oder Dicken hergestellt werden. Des Weiteren können die maßgeschneiderten Blechbänder 12 auch aus einer Kombination von unterschiedlichen Werkstoffen gebildet werden, zum Beispiel aus einer Kombination von Stahlband und Nichteisenband, einer Kombination von Aluminium und Magnesium, etc.. Bei den miteinander stoffschlüssig zu verbindenden Spaltbändern 1, 2 kann es sich im Rahmen der vorliegenden Erfindung aber auch um Spaltbänder gleicher Dicke, Werkstoffgüte und/oder Oberflächenbeschaffenheit handeln.

Die miteinander zu verschweißenden Spaltbänder 1, 2 liegen in Form von Coils 3 vor. Die einzelnen Spaltbänder bzw. Blechbänder 1, 2 werden zunächst nach dem Abwickeln vom jeweiligen Coil 3 in separaten Richtmaschinen 4, 5 geebnet. Im Anschluss daran bzw. an einer nachfolgenden Station erfolgt vorzugsweise eine Kantenbearbeitung, wobei zumindest die zu fügenden bzw. zu verschweißenden Kanten der Spaltbänder 1, 2 mittels Fräs- und/oder Schleifmaschinen 6, 7 auf den nachfolgenden Fügeprozess, vorzugsweise Schweißprozess vorbereitet werden können.

Die Spaltbänder 1, 2 werden mittels separater Fördermittel (Treibereinheiten) 8, 9 und Bandführungseinrichtungen, beispielsweise Bandführungsrollen, einer oder bei mehr als zwei Spaltbändern 1, 2 einer entsprechend größeren, jeweils um Eins reduzierten Anzahl von in Bandlaufrichtung hintereinander angeordneten Fügevorrichtung 10 zugeführt und dort im Durchlauf miteinander stoffschlüssig verbunden, vorzugsweise verschweißt. Die Spaltbänder 1, 2 werden dabei üblicherweise so zusammengeführt, dass ihre einander zugewandten Längskanten miteinander im Stumpfstoß stoffschlüssig verbunden werden können. Es liegt allerdings auch im Rahmen der vorliegenden Erfindung, die Spaltbänder 1, 2 oder bei mehr als zwei Spaltbändern 1, 2 zumindest zwei der Spaltbänder miteinander überlappend oder im Parallelstoß, T-Stoß oder Kreuzstoß stoffschlüssig zu verbinden.

Die Spaltbänder 1, 2 können endlos miteinander verbunden, insbesondere verschweißt werden. Als Schweißverfahren kommt dabei vorzugsweise Laserschweißen zum Einsatz. Alternativ kann als Schweißverfahren aber beispielsweise auch Hochfrequenzschweißen oder Reibrührschweißen (Friction Stir Welding = FSW) bei der Durchführung des erfindungsgemäßen Verfahrens angewandt werden.

Beim Reibrührschweißen handelt es sich um ein Fügeverfahren für Leichtmetalle. Bei diesem Fügeverfahren wird ein rotierender Stift mit großer Kraft in den Stumpfstoß zweier Blechhalbzeuge bzw. Spaltbänder gedrückt und entlang der Fügelinie bewegt. Das Werkstück wird im Bereich der Fügelinie erwärmt und durch die Rotation des Stiftes verrührt, so dass sich die Bleche verbinden. Eine spezielle Nahtvorbereitung und Schweißzusätze sind dabei nicht erforderlich. Da die beim Reibrührschweißen auftretenden Temperaturen, im Unterschied zu herkömmlichen Schmelz-Schweißverfahren, unterhalb des Schmelzpunktes von Leichtmetalllegierungen liegen, werden nachteilige Gefügeveränderungen vermieden. Dadurch können auch schlecht schmelz-schweißbare, höherfeste Leichtmetalllegierungen ohne Zusatzwerkstoff (Zusatzdraht) und ohne große Festigkeitseinbußen verschweißt werden.

Dem Arbeitspunkt 11 des Schweiß- bzw. Laserstrahls oder Reibrührstiftes wird vorzugsweise Schutzgas (Inertgas), z.B. Stickstoffgas zugeführt, um eine Oxidation der Schweißnaht 13 zu verhindern. Des Weiteren wird die mindestens eine Schweißnaht 13 vorzugsweise lokal durch eine Nacherwärmung wärmebehandelt, um mögliche Spannungsspitzen abzubauen oder wenigstens zu verringern.

Alternativ oder ergänzend zu der Nahtnacherwärmung wird das maßgeschneiderte Blechband 12 über seine gesamte Breite oder über die Breite eines seiner Blechbänder (Spaltbänder) 1, 2 temporär erwärmt, um die Gefügestruktur des Blechbandes 12 zu homogenisieren. Das Blechband 12 wird dabei auf eine Temperatur im Bereich von 200°C bis 500°C erwärmt. Die temporäre Erwärmung erfolgt vorzugsweise in einer Inertgasatmosphäre.

Die Bandzuführungseinrichtungen 4, 5, 8, 9 und die mindestens eine Fügestation 10 definieren eine Fertigungslinie. In der in Fig. 1 dargestellten Fertigungslinie ist mindestens eine Bearbeitungsstation 14 integriert, die mindestens eines der Spaltbänder (2) umformt bzw. profiliert, wohingegen das andere Spaltband 1 bzw. mindestens eines der Spaltbänder als geebnetes, räumlich nicht umgeformtes Spaltband dem Fügeprozess zugeführt wird. Die Bearbeitungsstation 14 zum Umformen, insbesondere Profilieren des Spaltbandes 2 ist vorzugsweise zwischen der Richtmaschine 5 und der Kantenbearbeitungsstation 7 angeordnet.

Die räumliche Struktur, die mittels der Bearbeitungsstation 14 in das bahnförmige Halbzeug (Spaltband) 2 eingeformt wird, kann eine Vielzahl näpfchenförmiger Vertiefungen und/oder mindestens eine rinnenförmige Vertiefung 2.1 umfassen. In dem in Fig. 1 dargestellten Ausführungsbeispiel werden in das Spaltband 2 durch Rollformen mehrere rinnenförmige Vertiefungen 2.1 eingeformt. Im Anschluss daran wird das profilierte Spaltband 2 der Kantenbearbeitungsstation 7 und nachfolgend der Fügestation 10 zugeführt.

Vorzugsweise wird das maßgeschneiderte Blechband 12 hinter der Fügestation 10 zu einem Coil aufgehaspelt. Dies ist gegebenenfalls auch bei einem aus einem profilierten Metallband 2 gebildeten maßgeschneiderten Blechband 12 möglich, sofern das profilierte Metallband bzw. Spaltband 2 aus relativ weichem Metall besteht und/oder die räumliche Struktur des umgeformten Metallbandes 2 eine relativ geringe Ausprägungstiefe aufweist.

Alternativ oder bei Bedarf kann das maßgeschneiderte Blechband 12 aber auch hinter der Fügestation 10 zu Platinen 12' abgelängt werden. Die so erhaltenen Platinen bzw. Paneele 12' weisen beispielsweise eine Länge von wenigstens 1,5 m, vorzugsweise wenigstens 2,5 m, und besonders bevorzugt wenigstens 5 m auf. Solche relativ langen Paneele 12' lassen sich bei geeigneter Zuführung bzw. Aneinanderreihung ebenfalls in Folgeverbundwerkzeugen verarbeiten.

In dem in Fig. 1 dargestellten Ausführungsbeispiel ist der Fügestation 10 eine Schneidevorrichtung 15 zum Ablängen des hergestellten maßgeschneiderten Blechbandes 12 nachgeordnet. Die Schneidevorrichtung 15 ist dabei an einer Trägereinrichtung angebracht, die parallel zu dem maßgeschneiderten Band 12 in Bandlaufrichtung vor und zurück bewegbar, vorzugsweise verfahrbar ist, so dass der kontinuierliche Fügeprozess in der Fügestation 10 während des Ablängens des maßgeschneiderten Blechbandes 12 nicht unterbrochen werden muss. Die Schneidevorrichtung 15 ist somit nach Art einer sogenannten "fliegenden Säge" ausgebildet.

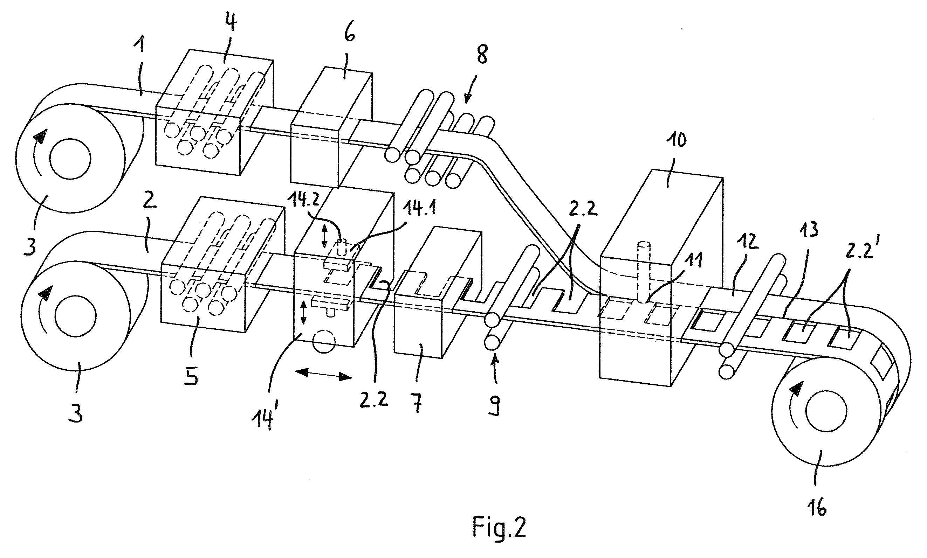

Das in Fig. 2 dargestellte Ausführungsbeispiel einer erfindungsgemäßen Vorrichtung bzw. Anlage zur Herstellung von maßgeschneiderten Blechbändern 12 unterscheidet sich von dem Ausführungsbeispiel gemäß Fig. 1 dadurch, dass zwischen der Richtmaschine 5, in der eines (2) der mindestens zwei Spaltbänder 1, 2 geebnet wird, und der Kantenbearbeitungsvorrichtung 7 eine Bearbeitungsstation 14' angeordnet ist, die das Spaltband bzw. bahnförmige Halbzeug 2 im Durchlauf locht und/oder mit Ausnehmungen 2.2 versieht. Die Bearbeitungsstation 14' ist hierzu mit mindestens einem Lochstanz- oder Schneidwerkzeug 14.1 ausgeüstet. Das Lochstanz- oder Schneidwerkzeug 14.1 kann beispielsweise an einem heb- und senkbaren Stempel 14.2 oder an einer rotierenden Walze (nicht gezeigt) angebracht sein.

Der das Lochstanz- oder Schneidwerkzeug 14.1 tragende heb- und senkbare Stempel 14.2 oder die rotierenden Walze ist zudem vorzugsweise an einem verfahrbaren Träger angebracht, der parallel zur Bandlaufrichtung vor und zurück bewegbar ist, so dass der kontinuierliche Bandvorschub und/oder der Fügeprozess während des Ausschneidens der Löcher bzw. der Ausnehmungen 2.2 nicht unterbrochen werden muss. Alternativ kann das bahnförmige Halbzeug 2 in Bandlaufrichtung vor und hinter der Bearbeitungsstation 14' auch in Bandschleifen (nicht gezeigt) geführt sein, welche als Materialpuffer einen intermittierenden Vorschub des außerhalb der Bearbeitungsstation 14' kontinuierlich bewegten Halbzeuges 2 im Bereich des Lochstanz- oder Schneidwerkzeuges 14.1 ermöglichen.

Wie in Fig. 2 gezeigt, wird das in die Fügestation 10 einlaufende bahnförmige Halbzeug bzw. Spaltband 2 in der Weise beschnitten, dass es vor der Fügestation 10 eine aufeinanderfolgende Ausnehmungen 2.2 aufweisende Zahnstruktur erhält. Ferner ist in Fig. 2 gezeigt, dass das bahnförmige Halbzeug 2 der Fügestation 10 so zugeführt wird, dass die Ausnehmungen 2.2 dem geebneten Blechband 1 zugewandt sind und mit demselben nach dem Fügen fensterartige Öffnungen 2.2' definieren. Das so hergestellte maßgeschneiderte Blechband 12 wird hinter der Fügestation vorzugsweise zu einem Coil 16 aufgehaspelt.

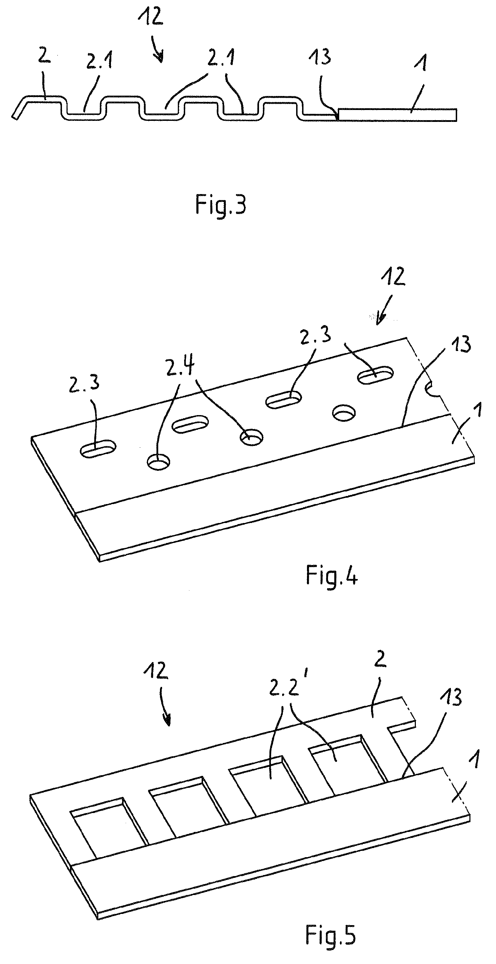

In den Figuren 3 bis 10 sind verschiedene Ausführungsbeispiele von erfindungsgemäß hergestellten maßgeschneiderten Blechbändern 12 dargestellt.

Das in Fig. 3 dargestellte maßgeschneiderte Blechband 12 wurde beispielsweise mittels einer Anlage gemäß Fig. 1 hergestellt. Das Blechband 12 ist aus bahnförmigen Halbzeugen bzw. Spaltbändern 1, 2 unterschiedlicher Dicke zusammengesetzt, die entlang einer Längskante im Stumpfstoß miteinander verschweißt sind. Während das Metallband 1 eine im Wesentlichen ebene Oberfläche aufweist, wurde in das Metallband 2 vor dem Fügeprozess eine dreidimensionale Struktur in Form eines parallel zueinander verlaufende Rinnen 2.1 aufweisenden Profils eingeformt.

Das in Fig. 4 dargestellte maßgeschneiderte Blechband 12 wurde beispielsweise mittels einer Anlage gemäß Fig. 2 hergestellt. Das Blechband 12 ist aus bahnförmigen Halbzeugen bzw. Spaltbändern 1, 2 gleicher oder unterschiedlicher Dicke zusammengesetzt, die entlang einer Längskante im Stumpfstoß miteinander verschweißt sind. Während das Metallband 1 eine vollständig geschlossene, ebene Oberfläche aufweist, wurde das Metallband 2 vor dem Fügeprozess gelocht. Das Metallband 2 und damit das maßgeschneiderte Blechband 12 weist Lochreihen aus Langlöchern 2.3 und kreisrunden Löchern 2.4 auf.

Das in Fig. 5 dargestellte maßgeschneiderte Blechband 12 wurde ebenfalls mittels einer Anlage gemäß Fig. 2 hergestellt. Die bahnförmigen Halbzeuge bzw. Spaltbänder 1, 2 sind dabei von gleicher oder unterschiedlicher Dicke. Zur Herstellung der durch die Ausnehmungen 2.2 unterbrochenen Schweißnaht 13 wird der Schweiß- oder Laserstrahl intermittierend betrieben. Vorzugsweise erfolgt das Fügen der Metallbänder 1, 2 bei diesem maßgeschneiderten Blechband 12 durch Laser-Schweißen.

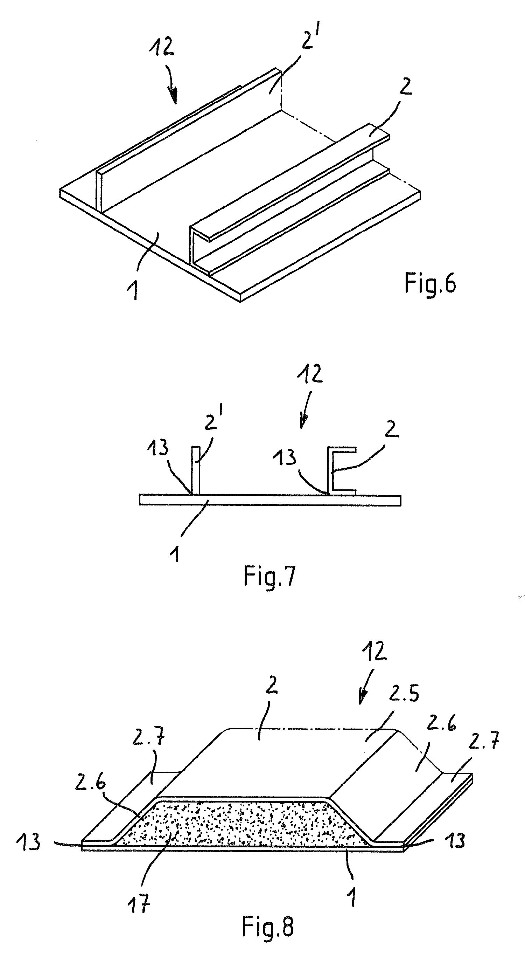

Das in den Figuren 6 und 7 dargestellte maßgeschneiderte Blechband 12 kann mittels einer gegenüber Fig. 1 modifizierten Anlage hergestellt werden. In diesem Fall werden ein Metallband 1 und weitere bahnförmige Halbzeuge 2, 2' entlang ihrer Längskante stoffschlüssig verbunden, wobei mindestens eines (2) der bahnförmigen Halbzeuge (2, 2') mittels einer der Fügestation 10 in Bandlaufrichtung vorgeordneten Bearbeitungsstation 14 in ein Profil, beispielsweise ein U-Profil umgeformt wird. Das Metallband 1 und die bahnförmigen Halbzeuge 2, 2' sind hier von unterschiedlicher Dicke und werden im T-Stoß bzw. Parallelstoß stoffschlüssig verbunden.

Das in Fig. 8 dargestellte maßgeschneiderte Blechband 12 kann ebenfalls mittels einer gegenüber Fig. 1 modifizierten Anlage hergestellt werden. Hierzu wird das eine Metallband 2 vor dem Fügeprozess durch Rollformen in der Bearbeitungsstation 14 in ein rinnenförmiges Profil umgeformt. Das rinnenförmige Profil weist dabei einen Bodenabschnitt 2.5, daran anschließende Flanken 2.6 und daran anschließende Flansche 2.7 auf. Das als rinnenförmiges Profil ausgebildete bahnförmige Halbzeug 2 wird dann der Fügestation 10 so zugeführt, dass die Rinne durch das geebnete Blechband 1 abgedeckt wird und mit demselben nach dem Fügen ein geschlossenes Hohlprofil bildet. Des Weiteren kann das Hohlprofil nach dem Fügen mit Wärmeisoliermaterial 17 befüllt oder ausgeschäumt werden.

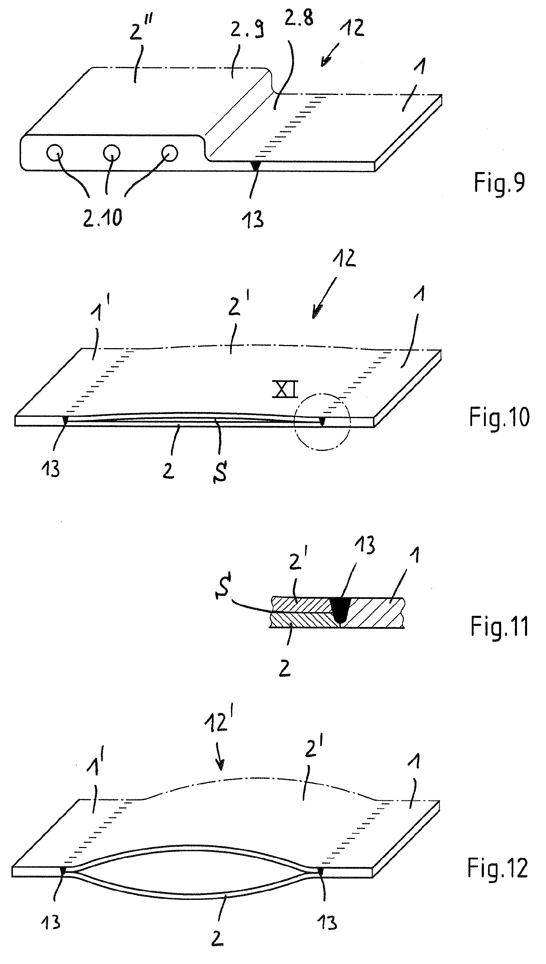

Das in Fig. 9 dargestellte maßgeschneiderte Blechband 12 wurde aus einem geebneten Blechband 1 und einem Strangpressprofil 2" hergestellt, wobei die bahnförmigen Halbzeuge 1, 2" entlang ihrer Längskante im Stumpfstoß verschweißt sind. Das Strangpressprofil 2" besteht vorzugsweise aus einer relativ weichen Metalllegierung, beispielsweise einer Aluminium- oder Kupferlegierung. Es weist unterschiedlich dicke Querschnittabschnitte 2.8, 2.9 auf. Dabei können in dem Strangpressprofil 2" ein oder mehrere Hohlkanäle 2.10, insbesondere geschlossene Hohlkanäle 2.10 ausgebildet sein.

In den Figuren 10 bis 12 ist ein maßgeschneidertes Blechband 12 skizziert, das aus bahnförmigen Halbzeugen 2, 2' aus Metall und geebneten Metallbändern 1, 1' zusammengesetzt wurde, wobei mindestens eines (2') der Halbzeuge (2, 2') im Querschnitt betrachtet leicht gewölbt ist. Die Wölbung des mindestens einen bahnförmigen Halbzeuges 2' wird vor dem Fügeprozess mit einer der Fügestation 10 in Bandlaufrichtung vorgeordneten Bearbeitungsstation 14 durch Rollformen erzeugt. Die bahnförmigen Halbzeugen 2, 2' besitzen im Wesentlichen die gleiche Breite und Dicke. Sie werden aufeinander gelegt, so dass ihre Längskanten im Stumpfstoß 13 mit den äußeren geebneten Metallbändern 1, 1' verschweißt werden können. Die Schweißnaht 13 verbindet dabei die beiden bahnförmigen Halbzeuge (Metallbänder) 2, 2' mit dem daran im Stumpfstoß angefügten geebneten Metallbandes 1 bzw. 1'. Die Dicke des geebneten Metallbandes 1, 1' kann dabei etwa das Doppelte der Dicke des jeweiligen bahnförmigen Halbzeuges 2, 2' betragen. Hinter der Fügestation 10 wird das maßgeschneiderte Blechband 12 gemäß Fig. 10 abgelängt. Anschließend wird bei der jeweiligen abgetrennten Blechbandplatine 12' in den aufgrund der Wölbung zwischen den bahnförmigen Halbzeugen 2, 2' vorhandenen Spalt S ein Druckfluid mit hohem Druck eingepresst, um das maßgeschneiderte Band 12 bzw. Platine 12' durch Innenhochdruckumformen in eine komplexe Form umzuformen.

Die Metallbänder 1, 1', 2, 2' der in den Figuren 1 bis 10 dargestellten maßgeschneiderten Blechbänder 12 können sich zudem in ihrer Materialgüte und/oder Oberflächenbeschaffenheit unterscheiden.

Die Ausführung der vorliegenden Erfindung ist nicht auf die in der Zeichnung dargestellten Ausführungsbeispiele beschränkt. Vielmehr sind eine Vielzahl von Varianten denkbar, die auch bei einer von den gezeigten Ausführungsbeispielen abweichenden Gestaltung von der in den Ansprüchen angegebenen Erfindung Gebrauch machen. Das erfindungsgemäße Verfahren sowie die erfindungsgemäße Vorrichtung umfasst insbesondere auch solche in der Zeichnung nicht dargestellte Ausführungsformen, die sich durch beliebige Kombination der in den Ansprüchen angegebenen Merkmale ergeben können. So liegt es beispielsweise auch im Rahmen der Erfindung, ein maßgeschneidertes Blechband 12 aus mindestens einem geebneten Spaltband 1, mindestens einem mit einer räumlichen Struktur (2.1) versehenen bahnförmigen Halbzeug 2 und mindestens einem bahnförmigen Halbzeug 2, das eine Vielzahl von in Längsrichtung aufeinanderfolgenden Ausnehmungen 2.2 und/oder Löchern 2.3 und/oder 2.4 aufweist, mittels Fügestationen 10 im Durchlauf herzustellen. Insbesondere können in einer erfindungsgemäßen Anlage die Bearbeitungsstationen 14 und 14' gemäß den Figuren 1 und 2 in Kombination zum Einsatz kommen.

## Patentansprüche

1. Verfahren zum Herstellen von maßgeschneiderten Blechbändern in einer Fertigungslinie (12, 12'), umfassend wenigstens eine Fügestation (10) und mindestens eine Bandzuführungseinrichtung (4, 8), bei dem mindestens ein Blechband (1, 1'), das eine im Wesentlichen ebene Oberfläche aufweist, endlos entlang seiner Längskante mit mindestens einem weiteren bahnförmigen Halbzeug (2, 2', 2 ") aus Metall stoffschlüssig verbunden wird, wobei sich das mindestens eine weitere bahnförmige Halbzeug (2, 2', 2 ") hinsichtlich mindestens einer seiner Eigenschaften von dem mindestens einen Blechband (1, 1') unterscheidet, und wobei das mindestens eine Blechband (1, 1') und das mindestens eine weitere bahnförmige Halbzeug (2, 2', 2 ") mindestens einer Fügestation (10) kontinuierlich zugeführt werden, **dadurch gekennzeichnet, dass** als das mindestens eine weitere bahnförmige Halbzeug (2, 2', 2 "), welches der Fügestation (10) zugeführt wird, in einer Bearbeitungsstation innerhalb der Fertigungslinie derart umgeformt wird, dass es eine dreidimensionale Struktur (2.1), ein Hohlprofil und/oder eine Vielzahl von entlang seiner Längskante aufeinanderfolgenden Ausnehmungen (2.2) und/oder Löchern (2.3, 2.4) aufweist.

2. Verfahren nach Anspruch 1,
**dadurch gekennzeichnet, dass** als das mindestens eine weitere bahnförmige Halbzeug (2), welches der Fügestation (10) zugeführt wird, ein bahnförmiges Halbzeug (2, 2') verwendet wird, das in Form eines Profils ausgebildet ist und eine Rinne (2.1) oder mehrere parallel zueinander verlaufende Rinnen (2.1) aufweist.

3. Verfahren nach Anspruch 2,
**dadurch gekennzeichnet, dass** das mindestens eine weitere bahnförmige Halbzeug (2) der Fügestation so zugeführt wird, dass die mindestens eine Rinne (2.1) durch das mindestens eine Blechband (1) abgedeckt wird und mit demselben nach dem Fügen ein geschlossenes Hohlprofil bildet,
wobei vorzugsweise das Hohlprofil nach dem Fügen mit Wärmeisoliermaterial (17) befüllt oder ausgeschäumt wird, und/oder_die mindestens eine Rinne (2.1) vor dem Fügen mit Wärmeisoliermaterial (17) befüllt oder beschichtet wird.

4. Verfahren nach einem der Ansprüche 1 bis 3,
**dadurch gekennzeichnet, dass** als das mindestens eine weitere bahnförmige Halbzeug (2), welches der Fügestation (10) zugeführt wird, ein bahnförmiges Halbzeug (2) verwendet wird, das mindestens zwei parallel zueinander verlaufende Lochreihen (2.3, 2.4) aufweist.

5. Verfahren nach einem der Ansprüche 1 bis 4,
**dadurch gekennzeichnet, dass** als das mindestens eine weitere bahnförmige Halbzeug (2), welches der Fügestation (10) zugeführt wird, ein bahnförmiges Halbzeug (10) verwendet wird, das entlang seiner Längskante eine durch aufeinanderfolgende Ausnehmungen (2.2) definierte Zahnstruktur aufweist.

6. Verfahren nach Anspruch 5,
**dadurch gekennzeichnet, dass** das mindestens eine weitere bahnförmige Halbzeug (2) der Fügestation (10) so zugeführt wird, dass die Ausnehmungen (2.2) dem mindestens einen Blechband (1) zugewandt sind und mit demselben nach dem Fügen fensterartige Öffnungen (2.2') definieren.

7. Verfahren nach einem der Ansprüche 1 bis 6,
**dadurch gekennzeichnet, dass** als das mindestens eine weitere bahnförmige Halbzeug, welches der Fügestation (10) zugeführt wird, ein bahnförmiges Halbzeug verwendet wird, das aus einem Strangpressprofil (2"), insbesondere einem Strangpresshohlprofil besteht oder gebildet ist.

8. Verfahren nach einem der Ansprüche 1 bis 7,
**dadurch gekennzeichnet, dass** das mindestens eine weitere bahnförmige Halbzeug der Fügestation so zugeführt wird, dass dasselbe nach dem Fügen einen von der ebenen Oberfläche des mindestens einen Blechbandes abstehenden Steg definiert.

9. Verfahren nach einem der Ansprüche 1 bis 8,
**dadurch gekennzeichnet, dass** aus dem mindestens einen Blechband und dem mindestens einen weiteren bahnförmigen Halbzeug, gegebenenfalls durch Hinzufügen mindestens eines weiteren Blechbandes, das eine im Wesentlichen ebene Oberfläche aufweist, und/oder mindestens eines weiteren bahnförmigen, profilierten Halbzeuges, ein Hohlprofil gebildet wird, das nach dem Fügen durch Innenhochdruckumformen umgeformt wird.

10. Verfahren nach einem der Ansprüche 1 bis 9,
**dadurch gekennzeichnet, dass** das mindestens eine Blechband (1, 1'), das eine im Wesentlichen ebene Oberfläche aufweist, und das mindestens eine weitere bahnförmige Halbzeug (2, 2', 2"), welches mit dem Blechband (1, 1') entlang seiner Längskante stoffschlüssig verbunden wird, sich bezüglich ihrer Dicke, Materialgüte und/oder Oberflächenbeschaffenheit unterscheiden.

11. Verfahren nach einem der Ansprüche 1 bis 10,
**dadurch gekennzeichnet, dass** eine an das mindestens eine Blechband (1, 1') anzufügende Kante des mindestens einen weiteren bahnförmigen Halbzeuges (2, 2', 2"), welches eine dreidimensionale Struktur (2.1), ein Hohlprofil und/oder eine Vielzahl von entlang seiner Längskante aufeinanderfolgenden Ausnehmungen (2.2)und/oder Löchern (2.1) aufweist, vor dem Fügen durch Schleifen und/oder Fräsen bearbeitet wird.

12. Vorrichtung zum Herstellen von maßgeschneiderten Blechbändern, umfassend mindestens eine Fügestation (10), mindestens eine Bandzuführungseinrichtung (4, 8) zum Zuführen mindestens eines Blechbandes (1, 1') in die Fügestation (10), mindestens eine weitere Zuführungseinrichtung (5, 9) zum Zuführen mindestens eines weiteren bahnförmigen Halbzeuges (2, 2', 2") aus Metall in die Fügestation (10), wobei in der Fügestation (10) ein endloses stoffschlüssiges Fügen des mindestens einen Blechbandes (1, 1') entlang seiner Längskante mit dem mindestens einen weiteren bahnförmigen Halbzeug (2, 2', 2") erfolgt, **dadurch gekennzeichnet, dass** der Fügestation (10) in Laufrichtung des bahnförmigen Halbzeuges (2, 2', 2") mindestens eine Bearbeitungsstation (14, 14') vorgeordnet ist, die ausgebildet ist, um das weitere bahnförmige Halbzeug (2, 2', 2") zu profilieren (2.1) und/oder in dieses eine Vielzahl von aufeinander folgenden Löchern (2.3, 2.4) und/oder Ausnehmungen (2.2) zu schneiden.

13. Vorrichtung nach Anspruch 12,
**dadurch gekennzeichnet, dass** der Fügestation (10) in Laufrichtung des bahnförmigen Halbzeuges (2, 2', 2") eine Schneidevorrichtung (15) zum Ablängen des hergestellten maßgeschneiderten Blechbandes (12) nachgeordnet ist, wobei die Schneidevorrichtung (15) an einer Trägereinrichtung angebracht ist, die parallel zu dem maßgeschneiderten Band (12) in Bandlaufrichtung vor und zurück bewegbar ist.

14. Vorrichtung nach Anspruch 12,
**dadurch gekennzeichnet, dass** der Fügestation (10) eine Aufwickelvorrichtung (16) zum Aufwickeln des hergestellten maßgeschneiderten Blechbandes (12) nachgeordnet ist.

15. Vorrichtung nach einem der Ansprüche 12 bis 14,
**dadurch gekennzeichnet, dass** zwischen der Bearbeitungsstation (14, 14'), die das weitere bahnförmige Halbzeug (2, 2', 2") profiliert (2.1) und/oder in dieses eine Vielzahl von aufeinander folgenden Löchern (2.3, 2.4) und/oder Ausnehmungen (2.2) schneidet, und der Fügestation (10) mindestens eine Kantenbearbeitungsstation (7) angeordnet ist, die ausgebildet ist, um eine an das mindestens eine Blechband (1, 1') anzufügende Kante des bahnförmigen Halbzeuges (2, 2', 2") durch Schleifen und/oder Fräsen zu bearbeiten.

## Claims

1. Method for the production of customised sheet metal strips in a production line (12, 12') comprising at least one joining station (10) and at least one strip supply means (4, 8), wherein at least one sheet metal strip (1, 1') having a substantially planar surface, is firmly and endlessly bonded along its longitudinal edge with at least one further web-shaped semi-finished metal product (2, 2', 2"), wherein the at least one further web-shaped semi-finished product (2, 2', 2") is different from the at least one sheet metal strip (1, 1') in at least one of its properties, and wherein the at least one sheet metal strip (1, 1') and the at least one further web-shaped semi-finished product (2, 2', 2") are continuously fed to the at least one joining station (10), **characterised in that** the at least one further web-shaped semi-finished product (2, 2', 2") that is fed to the joining station (10), is so reshaped in a machining station within the production line, that it has a three-dimensional structure (2.1), a hollow profile and/or a plurality of successive recesses (2.2) and/or holes (2.3, 2.4) along its longitudinal edge.

2. Method according to claim 1, **characterised in that** a web-shaped semi-finished product (2, 2'), which is in the form of a profile and has a gutter (2.1) or multiple parallel extending grooves (2.1), is used as the at least one further web-shaped semi-finished product (2) that is fed to the joining station (10).

3. Method according to claim 2, **characterised in that** the at least one further web-shaped semi-finished product (2) is so fed to the joining station (10) that the at least one gutter (2.1) is covered by the at least one sheet metal strip (1) to form a closed hollow profile with the latter following the joining, wherein the hollow profile is preferably filled with heat insulating material (17) or foam after joining, and/or the at least one gutter (2.1) is filled or coated with heat insulating material (17) prior to joining.

4. Method according to any one of the claims 1 to 3, **characterised in that** a web-shaped semi-finished product (2) having at least two mutually parallel rows of holes (2.3, 2.4) is used as the at least one further web-shaped semi-finished product (2) that is fed to the joining station (10).

5. Method according to any one of claims 1 to 4, **characterised in that** a web-shaped semi-finished product (10) with a tooth structure defined along its longitudinal edge in the form of successive recesses (2.2), is used as the at least one further web-shaped semi-finished product (2) that is fed to the joining station (10).

6. Method according to claim 5, **characterised in that** the at least one further web-shaped semi-finished product (2) is so fed to the joining station (10) that the recesses (2.2) face the at least one sheet metal strip (1) and define the same window-like openings (2.2') following joining.

7. Method according to any one of the claims 1 to 6, **characterised in that** a web-shaped semi-finished product comprising an extruded profile (2"), in particular an extruded hollow profile, is used as the at least one further web-shaped semi-finished product that is fed to the joining station (10).

8. Method according to any one of the claims 1 to 7, **characterised in that** the at least one further sheet-like semi-finished product is so fed to the joining station that, following joining, it defines a web protruding from the flat surface of the at least one sheet metal strip.

9. Method according to any one of the claims 1 to 8, **characterised in that** a hollow profile is formed from the at least one sheet metal strip and the at least one further web-shaped semi-finished product optionally by adding at least one further sheet metal strip which has a substantially planar surface, and/or at least one further web-shaped, profiled semi-finished product, and then reshaped following the joining by internal hydroforming.

10. Method according to any one of the claims 1 to 9, **characterised in that** the at least one sheet-metal strip (1, 1') having a substantially planar surface, and at least one further web-shaped semi-finished product (2, 2', 2"), which is firmly bonded with the sheet metal strip (1, 1') along its longitudinal edge, vary in thickness, material quality and/or surface finish.

11. Method according to any one of the claims 1 to 10, **characterised in that** one of the edges to be joined of the at least one sheet metal strip (1, 1') of the at least one further web-shaped semi-finished product (2, 2', 2") having a three-dimensional structure (2.1), a hollow profile and/or a plurality of successive recesses (2.2) and/or holes (2.1) along its longitudinal edge, is machined prior to the joining by grinding and/or milling.

12. Apparatus for the production of customised sheet metal strips, comprising at least one joining station (10), at least one strip supply means (4, 8) for supplying at least one sheet metal strip (1, 1') to the joining station (10), at least one further supply means (5, 9) for supplying at least one further web-shaped semi-finished product (2, 2', 2") made of metal to the joining station (10), wherein an endless firmly-bonding joining along its longitudinal edge of the at least one sheet metal strip (1, 1') with the at least one further web-shaped semi-finished product (2, 2', 2") is effected at the joining station (10), **characterised in that** the joining station (10) is arranged upstream of at least one machining station (14, 14') in the running direction of the web-shaped semi-finished product (2, 2', 2") in order to profile (2.1) the other web-shaped semi-finished product (2, 2', 2") and/or to cut a plurality of successive holes (2.3, 2.4) and/or recesses (2.2) in it.

13. Apparatus according to claim 12, **characterised in that** the joining station (10) is arranged downstream of a cutting device (15) in the running direction of the web-shaped semi-finished product (2, 2', 2") to cut the customised sheet metal strip (12), wherein the cutting device (15) is mounted on a support device which is movable back and forth parallel to the tailor-made belt (12) in the strip running direction.

14. Apparatus according to claim 12, **characterised in that** the joining station (10) is arranged downstream of a coiling device (16) to coil the customised sheet metal strip (12).

15. Apparatus according to one of the claims 12 to 14, **characterised in that** at least an edge machining station (7) is arranged between the machining station (14, 14'), which profiles (2.1) the further web-shaped semi-finished product (2, 2', 2") and/or cuts a plurality of successive holes (2.3, 2.4) and/or recesses (2.2) in it, and the joining station (10), wherein the edge machining station (7) is designed to machine one of the edges of the web-shaped semi-finished product (2, 2', 2") to be joined to the at least one sheet metal strip (1, 1') by grinding and/or milling.

## Revendications

1. Procédé de fabrication de bandes de tôle découpées sur mesure sur une ligne de fabrication (12, 12'), comprenant au moins une station d'assemblage (10) et au moins un dispositif d'alimentation des bandes (4, 8), dans lequel au moins une bande tôle (1, 1'), qui présente une surface globalement plane, est reliée avec liaison de matière, sans fin, le long de son bord longitudinal avec au moins un autre produit semi-fini (2, 2', 2") en forme de bande en métal, l'au moins un autre produit semi-fini en forme de bande (2, 2', 2") se distinguant, en ce qui concerne au moins une de ses propriétés, de l'au moins une bande de tôle (1, 1') et l'au moins une bande de tôle (1, 1') et l'au moins un autre produit semi-fini en forme de bande (2, 2', 2") étant introduit de manière continue dans une station d'assemblage (10), **caractérisé en ce que**, l'au moins un autre produit semi-fini en forme de bande (2, 2', 2"), qui est introduit dans la station d'assemblage (10), est façonné dans une station d'usinage dans le cadre de la ligne de fabrication, de façon à ce qu'il présente une structure tridimensionnelle (2.1), un profil creux et/ou une pluralité d'évidements (2.2) et/ou de trous (2.3, 2.4) se succédant le long de son bord longitudinal.

2. Procédé selon la revendication 1, **caractérisé en ce que**, en tant que l'au moins un autre produit semi-fini en forme de bande (2), qui est introduit dans la station d'assemblage (10), un produit semi-fini en forme de bande (2, 2') est utilisé, qui est réalisé sous la forme d'un profilé et présente une gouttière (2.1) ou plusieurs gouttières (2.1) parallèles les unes aux autres.

3. Procédé selon la revendication 2, **caractérisé en ce que** l'au moins un autre produit semi-fini en forme de bande (2) est introduit dans la station d'assemblage de façon à ce que l'au moins une gouttière (2.1) soit recouverte par l'au moins une bande de tôle (1) et forme, avec celle-ci, après l'assemblage, un profilé creux fermé, de préférence le profilé creux étant rempli ou moussé avec un matériau thermiquement isolant (17) et/ou l'au moins une gouttière (2.1) étant remplie ou revêtue, avant l'assemblage, avec un matériau thermiquement isolant (17).

4. Procédé selon l'une des revendications 1 à 3, **caractérisé en ce que**, en tant que l'au moins un autre produit semi-fini en forme de bande (2), qui est introduit dans la station d'assemblage (10), un produit semi-fini en forme de bande (2) est utilisé, qui comprend au moins deux rangées de trous (2.3, 2.4), parallèles entre elles.

5. Procédé selon l'une des revendications 1 à 4, **caractérisé en ce que**, en tant que l'au moins un autre produit semi-fini en forme de bande (2), qui est introduit dans la station d'assemblage (10), un produit semi-fini en forme de bande (2) est utilisé, qui comprend, le long de son bord longitudinal, une structure dentée définie par des évidements (2.2) successifs.

6. Procédé selon la revendication 5, **caractérisé en ce que** l'au moins un produit semi-fini en forme de bande (2) est introduit dans la station d'assemblage (10), de façon à ce que les évidements (2.2) sont orientés vers l'au moins une bande de tôle (1) et définissent, avec celle-ci, après l'assemblage, des ouvertures (2.2') en forme de fenêtres.

7. Procédé selon l'une des revendications 1 à 6, **caractérisé en ce que**, en tant que l'au moins un autre produit semi-fini en forme de bande, qui est introduit dans la station d'assemblage (10), un produit semi-fini en forme de bande est utilisé, qui est constitué ou formé d'un profilé extrudé (2"), plus particulièrement d'un profilé creux extrudé.

8. Procédé selon l'une des revendications 1 à 7, **caractérisé en ce que** l'au moins un autre produit semi-fini en forme de bande est introduit dans la station d'assemblage de façon à ce que celui-ci définisse, après l'assemblage, une nervure opposée à la surface plane de l'au moins une bande de tôle.

9. Procédé selon l'une des revendications 1 à 8, **caractérisé en ce que**, à partir de l'au moins une bande de tôle et de l'au moins un autre produit semi-fini en forme de bande, le cas échéant par l'ajout d'au moins une autre bande de tôle, qui présente une surface globalement plane, et/ou d'au moins un autre produit semi-fini profilé en forme de bande, un profilé creux est formé, qui est façonné après l'assemblage par formage à haute pression interne.

10. Procédé selon l'une des revendications 1 à 9, **caractérisé en ce que** l'au moins une bande de tôle (1, 1'), qui présente une surface globalement plane, et l'au moins un autre produit semi-fini en forme de bande (2, 2', 2"), qui est relié, avec une liaison de matière, avec la bande de tôle (1, 1') le long de son bord longitudinal, se distinguent entre elles en ce qui concerne leur épaisseur, la qualité du matériau et/ou la qualité de leur surface.

11. Procédé selon l'une des revendications 1 à 10, **caractérisé en ce qu'**un bord, à assembler avec l'au moins une bande de tôle (1, 1'), de l'au moins un autre produit semi-fini (2, 2', 2"), qui présente une structure tridimensionnelle (2.1), un profil creux et/ou une pluralité d'évidements (2.2) et/ou de trous (2.1) se succédant le long de son bord longitudinal, est usiné avant l'assemblage par meulage et/ou fraisage.

12. Dispositif de fabrication de bandes de tôles découpées sur mesure, comprenant au moins une station d'assemblage (10), au moins un dispositif d'introduction de bande (4, 8) pour l'introduction d'au moins une bande de tôle (1, 1') dans la station d'assemblage (10), au moins un autre dispositif d'introduction (5, 9) pour l'introduction d'au moins un autre produit semi-fini en forme de bande (2, 2', 2") en métal dans la station d'assemblage (10), un assemblage sans fin par liaison de matière de l'au moins une bande de tôle (1, 1') le long de son bord longitudinal avec l'au moins un autre produit semi-fini en forme de bande (2, 2', 2") ayant lieu dans la station d'assemblage (10), **caractérisé en ce qu'**au moins une station d'usinage (14, 14') est disposée en amont de la station d'assemblage (10) dans le sens de déplacement du produit semi-fini en forme de bande (2, 2', 2"), qui est conçue pour profiler (2.1) l'autre produit semi-fini en forme de bande (2, 2', 2") et/ou pour découper, dans celui-ci, une pluralité de trous (2.3, 2.4) et/ou d'évidements (2.2) successifs.

13. Procédé selon la revendication 12, **caractérisé en ce qu'**un dispositif de coupe (15) est disposé en aval de la station d'assemblage (10) dans la direction de déplacement du produit semi-fini en forme de bande (2, 2', 2"), pour la découpe à la longueur souhaitée de la bande de tôle (12) découpée sur mesure, le dispositif de coupe (15) étant monté sur un dispositif de support qui est mobile parallèlement à la bande (12) découpée sur mesure, vers l'avant et vers l'arrière dans la direction de déplacement de la bande.

14. Procédé selon la revendication 12, **caractérisé en ce qu'**un dispositif d'enroulement (16) est disposé en aval de la station d'assemblage (10) pour l'enroulement de la bande de tôle (12) découpée sur mesure fabriquée.

15. Procédé selon l'une des revendications 12 à 14, **caractérisé en ce que**, entre la station d'usinage (14, 14'), qui profile (2.1) l'autre produit semi-fini en forme de bande (2, 2', 2") et/ou découpe dans celui-ci une pluralité de trous (2.3, 2.4) et/ou d'évidements (2.2) successifs, et la station d'assemblage (10), se trouve au moins une station d'usinage des bords (7) qui est conçue pour usiner, par meulage et/ou par fraisage, un bord du produit semi-fini en forme de bande (2, 2', 2") à assembler avec l'au moins une bande de tôle (1, 1').
